**Europäisches Patentamt**

**European Patent Office**

**Office européen des brevets**

(11) Veröffentlichungsnummer : **0 512 945 A2**

(12) # EUROPÄISCHE PATENTANMELDUNG

(21) Anmeldenummer : **92810278.9**

(22) Anmeldetag : **15.04.92**

(51) Int. Cl.⁵ : **F24F 13/00, F24F 12/00**

(30) Priorität : **08.05.91 CH 1391/91**

(43) Veröffentlichungstag der Anmeldung :
**11.11.92 Patentblatt 92/46**

(84) Benannte Vertragsstaaten :
**AT DE**

(71) Anmelder : **WIELER & DURIAN
ANLAGENTECHNIK GmbH
Robert-Mayer-Strasse 10
W-7068 Urbach (DE)**

(72) Erfinder : **Zils, Otfried
Gassackerstrasse 7/2
W-7060 Schorndorf (DE)**

(74) Vertreter : **Quehl, Horst Max, Dipl.-Ing.
Patentanwalt Postfach 104 Ringstrasse 7
CH-8274 Tägerwilen (CH)**

(54) **Vorrichtung für die Klimatisierung von Räumen.**

(57)     Für die Verringerung des Leistungsbedarfs der Ventilatoren einer Vorrichtung zur Klimatisierung von Räumen ist mindestens einer der in einem Luftkanal (10,14) vorgesehenen Wärmetauscher (12,15) der Vorrichtung durch eine Betätigungseinrichtung (20,21) zwischen einer den Strömungsquerschnitt ausfüllenden und einer aus diesem herausbewegten Position (12',15') verstellbar.

Die Erfindung betrifft eine Vorrichtung für die Klimatisierung von Räumen,, mit einem in einem Strömungskanal angeordneten Wärmetauscher, für den Wärmeentzug aus der dem Raum zuzuführenden Frischluft.

Bekannte Vorrichtungen dieser Art haben den Nachteil, dass der Wärmetauscher für die Frischluftzufuhr ein ständiges erhebliches Strömungshindernis darstellt, obwohl er nur zu einigen Zeiten für die Kühlung der Frischluft benötigt wird, wenn die Frischluft eine bestimmte Temperatur überschreitet. Zur Vermeidung dieses Nachteils wurde bereits vorgeschlagen, die Frischluft im Bypass an der Vorrichtung vorbeizuleiten. Hierfür ist jedoch entweder ein erheblicher konstruktiver Aufwand erforderlich, und meist ist diese Lösung aufgrund beschränkter Platzverhältnisse nicht auf zufriedenstellende Weise realisierbar, oder im Bypassbetrieb erhält die Frischluft nicht die erwünschte Zuströmrichtung in den zu belüftenden Raum hinein.

Der Erfindung liegt die Aufgabe zugrunde, die genannten Nachteile bekannter Vorrichtungen zu vermeiden und somit eine Vorrichtung Art zu finden, die es bei beschränktem konstruktivem Aufwand ermöglicht, Frischluft bei verhältnismässig geringem Strömungsverlust über die für die Luftzuführung und Luftverteilung zu einem Raum vorgesehenen Strömungskanäle zu leiten. Die Lösung dieser Aufgabe erfolgt aufgrund der kennzeichnenden Merkmale des Patentanspruchs 1.

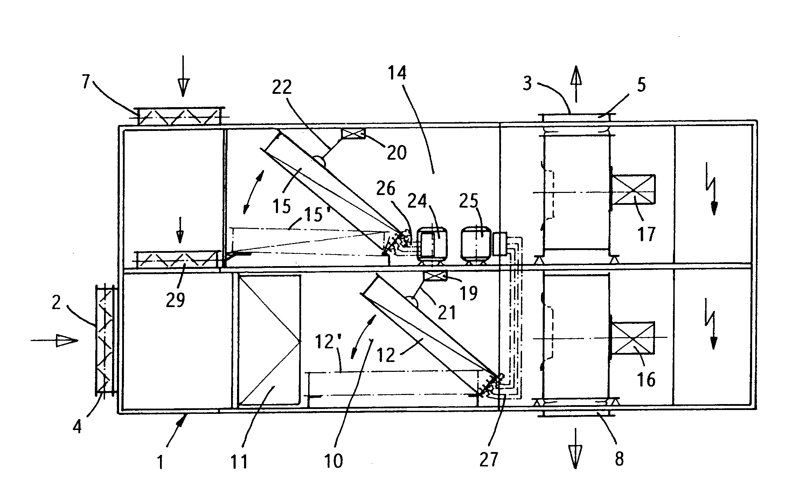

Vorteilhafte Ausführungsformen der Erfindung sind Gegenstand der abhängigen Patentansprüche und der folgenden Beschreibung anhand der Zeichnung zu entnehmen. Diese zeigt in schematischer Darstellung eine Seitenansicht einer erfindungsgemäsen Vorrichtung.

Die dargestellte Vorrichtung 1 kann als sogenanntes Kompaktklimagerät in dem zu kühlenden Raum angeordnet werden, so dass es nur für die von ausserhalb des Raumes zuzuleitende Frischluft und für die aus dem Raum abzuführende Abluft jeweils einer nichtdargestellten Verbindung der betreffenden Oeffnungen 2,3 durch einen Mauerdurchbruch in der angrenzenden Raumwand hindurch nach aussen bedarf. Bei der Anordnung der Vorrichtung angrenzend an eine Raumecke sind somit auch für die Frisch- und Abluft kurze Anschlussstutzen 4,5 anstatt längerer Rohrleitungen ausreichend. Für die Zuleitung von Abluft aus dem Raum und für das Ausströmen der Frischluft hat die Vorrichtung ausserdem Oeffnungen mit kurzen Stutzen 7,8.

Die Vorrichtung hat zwei voneinander getrennte Strömungskanäle. Ein erster Strömungskanal 10 führt die Frischluft von dem Zuströmstutzen 2 über einen Filter 11 und einen Verdampfer 12 einer Kühlanlage zu dem Abströmstutzen 8. Ein zweiter Strömungskanal 14 führt Abluft aus dem die Vorrichtung 1 umgebenden Raum von dem Zuströmstutzen 7 über den Kondensator 15 derselben Kühlanlage zu dem Abströmstutzen 5. Für jeden dieser Ströme ist ein Ventilator mit einem Antrieb 16,17 vorgesehen.

Bei an sich bekannten Vorrichtungen der zuvor beschriebenen Art werden der Verdampfer (12) und der Kondensator (15) der Kühlanlage mit erheblichem Strömungswiderstand dauernd von Luft durchströmt, so dass die Antriebe (16,17) eine entsprechende Dauerleistung erbringen müssen, obwohl die Kühlanlage bei gemässigtem Klima nur zu ca. 10 bis 15 % in Betrieb ist.

Gemäss der erfindungsgemässen Ausführung der Vorrichtung sind der Verdampfer 12 und der Kondensator 15 mittels einer Betätigungseinrichtung 19,20 aus dem Luftstrom herausbewegbar, so dass sie auf Energie sparende Weise von ihm nicht mehr durchströmt werden. Die hierfür vorzusehende Kinematik und die Art der Betätigungseinrichtungen lassen zahlreiche Ausführungsformen zu. Beispielsweise sind der plattenförmige Verdampfer und Kondensator an einer Seitenkante scharnierartig auf- und abwärts schwenkbar gehalten, während an einem gegenüberliegenden Bereich die Betätigungseinrichtung 19,20 angreift.

Die Betätigungseinrichtungen 19,20 können einen über eine angetriebene Rolle geführten Seilzug 21, 22 aufweisen oder eine Gewindespindel, eine Zylinder-Kolbeneinheit o.dgl.

Falls die über den Stutzen 4 angesaugte Frischluft nicht gekühlt werden muss, sind der Verdampfer 12 und der Kondensator 15 in die durch Strichlinien angedeutete Position 12′,15′ abgesenkt, so dass die Luft parallel zu ihnen vorbeiströmt, und die Antriebe 16,17 der Ventilatoren sind auf eine niedrige Leistung geschaltet. Diese Umschaltung der Antriebe 16,17 kann in Abhängigkeit von der Funktion der Betätigungseinrichtungen automatisch gesteuert sein.

Die Verbindung des Verdampfers 12 und des Kondensators 15 mit den Aggregaten 24,25 der Kälteanlage, um das Kühlmittel zirkulieren zu lassen, erfolgt über flexible Leitungen 26,27.

Im Zuströmbereich der nebeneinander verlaufenden Strömungskanäle 10,14 kann zwischen beiden eine z.B. durch schwenkbare Lamellen verschliessbare Oeffnung 29 vorgesehen sein. Entsprechend können auch die Oeffnungen der beiden Zuströmstutzen 4,7 verschliessbar ausgeführt sein, so dass der Frischluft eine beliebiger Anteil (0 -100%) an Abluft aus dem Raum zugemischt werden kann bzw. die Vorrichtung wahlweise nur für die Kühlung der als Umluft geführten Abluft verwendet werden kann.

Es versteht sich, dass das erfindungsgemässe Prinzip der schwenkbaren Wärmeaustauscher (12,15) auch für Vorrichtungen anwendbar ist, die ein anderes System für die Erzeugung einer Kühlleistung aufweisen.

## Patentansprüche

1. Vorrichtung für die Klimatisierung von Räumen, mit einem in einem Strömungskanal angeordneten Wärmetauscher, für den Wärmeentzug aus der dem Raum zuzuführenden Frischluft, dadurch gekennzeichnet, dass der Wärmetauscher (12,15) in dem Strömungskanal (10,14) beweglich gehalten und mit einem Betätigungsmechanismus (20,21) verbunden ist, so dass seine Position zwischen einer den Strömungsquerschnitt ausfüllenden und einer ihn freigebenden Position (12',15') verstellbar ist.

2. Vorrichtung nach Anspruch 1, dadurch gekennzeichnet, dass der Wärmetauscher der Verdampfer (12) einer ausserdem einen Kondensator (15) und einen Kompressor aufweisenden Kühlanlage ist.

3. Vorrichtung nach Anspruch 2, dadurch gekennzeichnet, dass der Kondensator (15) in einem zweiten Strömungskanal (14) beweglich gehalten und mit einem Betätigungsmechanismus (20) verbunden ist, so dass er zwischen einer den Strömungsquerschnitt ausfüllenden und einer ihn freigebenden Position verstellbar ist.

4. Vorrichtung nach Anspruch 1 oder 2, gekennzeichnet durch mindestens einen Ventilator zur Förderung von Luft durch den Strömungskanal, wobei ein Steuerungseinrichtung vorhanden ist, zur Steuerung des Ventilatorantriebes in Abhängigkeit von der Position des Verdampfers (12) und/oder des Kondensators (15) in dem Strömungskanal (10,14).

5. Vorrichtung nach einem der Ansprüche 1 bis 4, dadurch gekennzeichnet, dass der Wärmetauscher (12,15) um eine entlang einer seiner Kanten verlaufende Achse zwischen einer sich über den Strömungsquerschnitt des Strömungskanals sich erstreckenden Position und einer an zu dessen Wand parallelen Position schwenkbar ist.